# EUROPEAN PATENT SPECIFICATION

(11) **EP 1 861 328 B1**
(45) Date of publication and mention of the grant of the patent: **24.02.2010**
(21) Application number: 06725028.2
(22) Date of filing: 13.03.2006
(51) Int. Cl.: B65H 45/16

(54) **INTERMITTENT DRIVE SYSTEMS**
INTERMITTIERENDE ANTRIEBSSYSTEME
SYSTEMES D'ENTRAINEMENT INTERMITTENT

(30) Priority: 11.03.2005 GB 0505010
(43) Date of publication of application: 05.12.2007
(73) Proprietor: Quin Systems Limited, Wokingham, Berkshire RG41 2FD (GB)
(72) Inventor: WEBB, Michael, Hampshire GU51 4LF (GB)
(74) Representative: Stanley, David William
(86) International application number: PCT/EP2006/060670
(87) International publication number: WO 2006/095028

(56) References cited:
- US-A- 2 348 605
- US-A- 2 981 540
- US-A- 3 348 837

## Description

The present invention relates to intermittent drive systems and is concerned particularly, although not exclusively, with intermittent drive systems for tucking blades that are used for cutting, collating and folding sheets in, for example, the newspaper printing industry.

In a conventional newspaper printing press, a plurality of webs of printed paper are fed to a cutting and folding station, where they are cut and entrained in layers on a folding cylinder. As the folding cylinder rotates, a tucking blade is caused to protrude from the cylinder at a predetermined angular position of the cylinder, where the blade engages the layers of printed paper on the surface of the cylinder and pushes them into the nip of a folding roller assembly, where the sheets of paper are folded and then passed on to subsequent stations for further possessing.

In such a conventional arrangement, as described, for example, in US 3348837, the tucking blade is activated at the same angular position, upon each revolution of the cylinder. In practice, a number of tucking blades may be provided at regular intervals around the folding cylinder, for faster operation.

Such a conventional arrangement is unsuitable for modem digital printing presses. One reason is that, with digital presses, the page content is varied serially along the web of newsprint (paper), rather than combining a plurality of webs that are printed identically along each web and shifted in phase. In a digital arrangement, when the web is cut, successive sheets have to be collated on the folding cylinder, before they can be folded. In consequence, it is necessary to operate the tucking blade only intermittently, rather than invariably upon each revolution of the folding cylinder.

There is thus a requirement for an intermittent drive mechanism to operate a tucking blade on a folding cylinder, in a manner compatible with collation, cutting and folding of a printed web from a digital printing press. Moreover, it is desirable for such a mechanism to be capable of operating at the very high throughput speeds of which modem digital printing presses are capable.

Typically, in a digital printing press, printing is effected by digital means using a rotating drum onto which an electronic image is imposed by an electrostatic charge. This in turn attracts a toner powder, or liquid, which is deposited on the web of paper. Using an electrostatic discharge device, the image on the drum is removed ready to receive a fresh image, thereby giving sequential pagination as the web of paper passes through the printing press. Drum diameter has no relationship to the print length.

Preferred embodiments of the invention aim to provide an intermittent drive mechanism that meet such requirements.

According to one aspect of the present invention, there is provided a sheet handling system comprising:
a. a cylinder arranged to engage a sheet on the outer circumferential surface of the cylinder and to transport the sheet from an entry position to an exit position by rotation of the cylinder about its axis; and
b. a drive mechanism mounted at least partly within the cylinder and arranged to cause a member to protrude intermittently from the surface of the cylinder to engage a sheet on that surface:
c. said drive mechanism comprising:
   i. a primary gear mounted for rotation about an axis parallel to the cylinder axis;
   ii. an arm extending radially of the cylinder and mounted for rotation about an axis parallel to the cylinder axis; and
   iii. a planet gear mounted for rotation on said arm, in driving engagement with said primary gear, and operatively connected to said member:
   wherein:
d. said primary gear is arranged to rotate according to a first velocity profile;
e. said arm is arranged to rotate according to a second velocity profile; and
f. said first and second velocity profiles are such that
   i. said planet gear rotates to cause said member to protrude from the surface of the cylinder at first selected times when the cylinder is in a given angular position; and
   ii. said planet gear does not rotate to cause said member to protrude from the surface of the cylinder at second selected times when the cylinder is in said given angular position.

Preferably, said primary gear is mounted for rotation about the cylinder axis.

Preferably, said arm is mounted for rotation about the cylinder axis.

The said member may be a tucking blade that cooperates with a folding nip to fold said sheet.

The said member may be a cutting blade.

The said member may be a numbering head.

Preferably, said primary gear is a sun gear.

Said primary gear may be a ring gear.

A sheet handling system as above may further comprise a motor arranged to drive said primary gear in rotation.

A sheet handling system as above may further comprise a motor arranged to drive said arm in rotation.

Preferably, said arm is fixed relative to the cylinder such that the arm rotates with the cylinder.

Said primary gear may be fixed relative to the cylinder such that the arm rotates with the cylinder.

A sheet handling system as above may further comprise control means arranged to determine said first and/or second velocity profile.

Preferably, said control means is arranged to control movement of at least one electric motor arranged to drive said primary gear and/or arm and/or cylinder in rotation.

Preferably, a sheet handling system as above further comprises retaining means arranged to retain one or more sheet on the cylinder.

Preferably, a sheet handling system as above further comprises means arranged to engage and release said retaining means at times fixed in relation to operation of said member.

Preferably, a sheet handling system as above further comprises cutting means arranged to cut a web of material into sheets as it is fed onto the cylinder.

Preferably, a sheet handling system as above comprises a plurality of planet gears mounted for rotation on respective arms of a planet carrier and in driving engagement with said primary gear:
A sheet handling system as above may comprise a plurality of members arranged to protrude intermittently from the surface of the cylinder to engage a sheet on that surface.

Preferably, each said planet gear is operatively connected to a respective one of said members.

A sheet handling system as above may further comprise guide means arranged to constrain movement of said planet gear when said cylinder is in said given angular position.

Preferably, said guide means is such as to constrain movement such that said planet gear may occupy only two possible angular positions when said cylinder is in said given angular position.

In another aspect, the invention provides a printing press incorporating a sheet handling system according to any of the preceding aspects of the invention, arranged to cut and/or collate and/or fold printed sheets of newsprint.

Such a printing press may be arranged to feed a single web of printed newsprint onto the cylinder, where the web is cut, collated and folded.

Printing may be effected by a digital process.

In another aspect, the invention provides an intermittent drive system comprising:
a. a cylinder mounted for rotation about its axis; and
b. a drive mechanism mounted at least partly within the cylinder and arranged to cause a member to protrude intermittently from the surface of the cylinder:
c. said drive mechanism comprising:
   i. a primary gear mounted for rotation about an axis parallel to the cylinder axis;
   ii. an arm extending radially of the cylinder and mounted for rotation about an axis parallel to the cylinder axis; and
   iii. a planet gear mounted for rotation on said arm, in driving engagement with said primary gear, and operatively connected to said member:
   wherein:
d. said primary gear is arranged to rotate according to a first velocity profile;
e. said arm is arranged to rotate according to a second velocity profile; and
f. said first and second velocity profiles are such that:
   i. said planet gear rotates to cause said member to protrude from the surface of the cylinder at first selected times when the cylinder is in a given angular position; and
   ii. said planet gear does not rotate to cause said member to protrude from the surface of the cylinder at second selected times when the cylinder is in said given angular position.

Such an intermittent drive system may optionally include any of the further features described or illustrated herein.

For a better understanding of the invention, and to show how embodiments of the same may be carried into effect, reference will now be made, by way of example, to the accompanying diagrammatic drawings, in which:
Figure 1 illustrates a cutting and folding station in a printing press;
Figure 2 illustrates a conventional tucking blade drive arrangement;
Figure 3 is a view similar to that of Figure 2, but illustrating an improved tucking blade drive arrangement; and
Figure 4 is another view similar to that of Figure 2, but illustrating another improved tucking blade drive arrangement
Figure 5 is another view similar to that of Figures 2 and 3, but illustrating an alternative embodiment.

In the figures, like references denote like or corresponding parts.

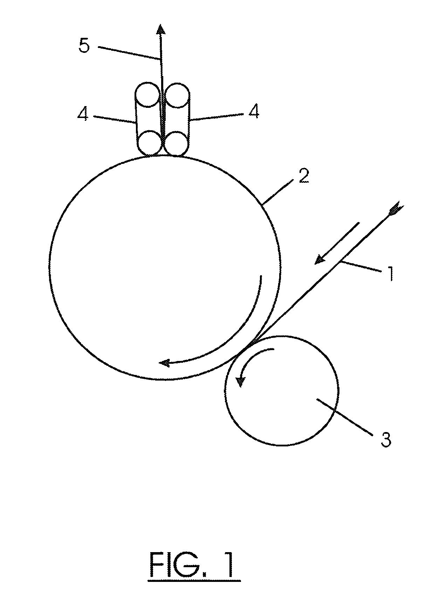

In Figure 1, a web 1 of printed newsprint is fed to a nip between a folding cylinder 2 and a cutting cylinder 3. The folding cylinder 2 carries a row of needles (not shown, but well known to the skilled reader) and the cutting cylinder 3 is provided with a serrated knife (not shown, but equally well known to the skilled reader).

The leading edge of the web 1 is impaled on the row of needles carried on the folding cylinder 2, a small distance (e.g. 15mm) back from what will be the cut. At about the same time as the needles pierce the paper, the serrated knife mounted across the cutting cylinder 3 severs the web 1, leaving the leading edge of the web impaled on the needles, ready to be carried around by the rotating folding cylinder2.

Mounted above and close to the top of the folding cylinder 2 is a pair of folding rollers 4 providing a nip into which cut sheets carried on the folding cylinder 2 are inserted, to make a fold. The aforementioned tucking blade is usually retained below the outer surface of the cylinder 2. However, by way of a gearing mechanism, the tucking blade is arranged to project above the surface of the cylinder 2 as it approaches the folding rollers 4, thereby to engage the sheet of cut paper on the surface of the cylinder 2 and push it into the nip of the folding rollers 4, which then transport the paper upwardly as shown at 5 and thereby complete the fold.

This general mode of operation, as explained thus far, may be common to both conventional folding and cutting stations and to embodiments of the present invention.

In a conventional system, with traditional printing presses, instead of a single web 1, a plurality of identical webs are fed into the nip of the folding and cutting cylinders 2, 3 in suitable phase relationship, to make up a complete newspaper. The layered sheets of paper are cut together on the cutting cylinder 3 and travel around the folding cylinder 2, on which they are impaled by the aforementioned needles, until the tucking blade operates adjacent the nip of the folding rollers 4, to fold all of the sheets together and feed the folded sheets together upwardly as shown at 5.

As a point of detail, the folding rollers 4 would typically be found below the folding cylinder 2 in a conventional arrangement. However, in preferred embodiments of the present invention, they are provided at the top of the folding cylinder 2, as other operations, not common to normal newspaper production, are required.

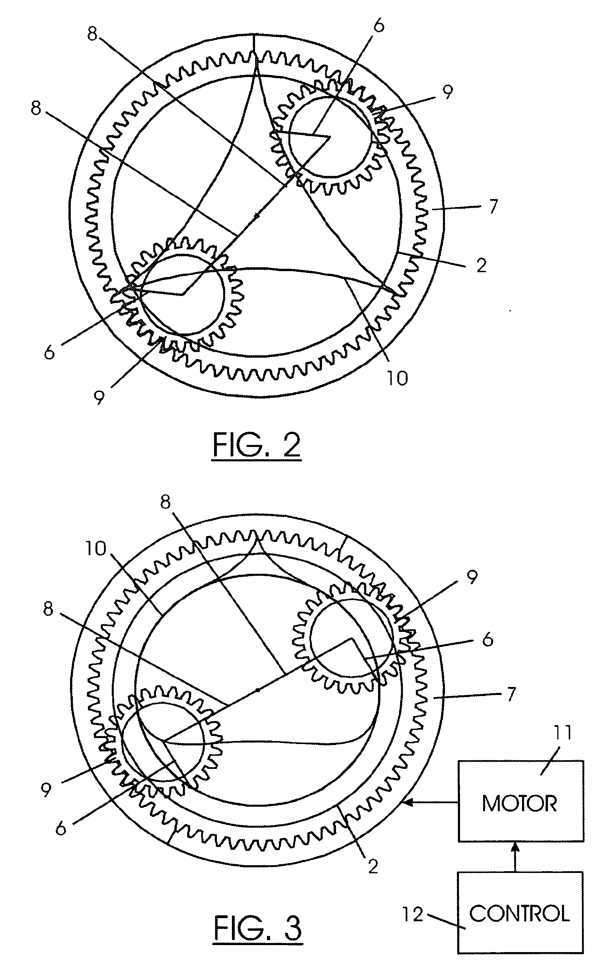

Figure 2 illustrates in further detail the tucking blade 6 of a conventional system. In the example of Figure 2, two complementary tucking blades 6 are provided at diametrically opposite positions with respect to the folding cylinder 2. In Figure 2, the folding cylinder 2 is represented by its external diameter. A stationary ring gear 7 is disposed coaxially around the folding cylinder 2.

A planet carrier having diametrically opposite arms 8 is mounted in fixed relation to the folding cylinder 2 and is arranged to rotate coaxially with it. Each arm 8 carries at its end a respective planet gear 9, which meshes with internal teeth of the ring gear 7 and is arranged to rotate freely on the arm 8.

Each tucking blade 6 is fixed in relation to a respective planet gear 9, such that it rotates with it. The resulting locus of travel of each of the tucking blades 6 is shown at 10. It can be seen from this that each tucking blade 6 protrudes from the surface of the folding cylinder 2 at three equally-spaced (120°) angular positions of the rotating cylinder.

With a general configuration as illustrated in Figure 1, when each tucking blade 6 protrudes from the surface of the folding cylinder 2 at the uppermost angular position of the rotating cylinder, it pushes the cut sheets of paper on the surface of the cylinder 2 into the nip of the folding rollers 4. In a conventional arrangement, the cut sheets are present on only about half of the cylinder surface, such that the tucking blades 6 do not engage the cut sheets in the two lower (as seen in Figure 2) positions where they protrude from the cylinder 2.

The conventional arrangement as illustrated and described with reference to Figures 1 and 2 works very well with traditional printing presses. The geared configuration assures reliable, high-speed operation, in synchronisation with the rest of the printing press. The provision of two tucking blades 6 facilitates a high throughput rate. Each of the two tucking blades 6 co-operates in turn with the folding rollers 4, during each revolution of the cylinder 2.

However, as described above, this arrangement becomes unsuitable when the web 1 that is fed to the folding and cutting cylinders 2, 3 is provided from a digital printing press. In this case, the folding cylinder 2 needs to perform several revolutions, during each of which a successive sheet of the web 1 is cut and collated on the folding cylinder 2 with the other sheets necessary to make up the respective publication, prior to initiating a folding operation. Thus, the tucking blades 6 need to be kept below the surface of the folding cylinder 2 until they are required to be activated, once every x revolutions, where x is an integer equal to 2 or more.

After considerable thought, we have come up with a modification of the configuration shown in Figure 2, to provide a relatively simple and reliable means of activating tucking blades 6 intermittently.

Such an arrangement is shown in Figure 3, where corresponding parts carry the same references as in Figure 2.

The principle difference between the arrangements of Figures 2 and 3 is that, in Figure 3, the ring gear 7 is not stationary but driven in rotation by a motor 11 under the control of a controller 12.

The controller 12 controls operation of the motor 11 such that, for most of the time, the ring gear 7 rotates at the same speed as the cylinder 2 and arms 8. However, when it is desired to initiate a folding operation, the ring gear 7 is momentarily stopped or slowed. The relative motion that then occurs between the ring gear 7 and the planet gears 9 causes the planet gears 9 to rotate about their axes and cause the respective tucking blades 6 to protrude above the surface of the folding cylinder 2, where they can engage the collated sheets on the cylinder surface and push them into the nip of the folding rollers 4. Upon completion of the movement of the planet gears 9 and associated tucking blades 6, the ring gear 7 is again caused to move at the same angular speed as the arms 8, such that the tucking blades 6 retain their "silenced" positions, below the surface of the cylinder 2.

It will be appreciated that, by modem motor control techniques, the movement of the ring gear 7 can be controlled very precisely, and it may be given any desired velocity profile. Preferably, the ring gear is servo driven. Synchronisation of the ring gear 7 with the planet arms 8 and cylinder 10 may be effected in many suitable ways - for example, the ring gear 7 and folding cylinder 2 may be optically coded to facilitate synchronisation.

One possible locus of a tucking blade 6 is shown in Figure 3 by the reference 10. As will be understood from the above, any other suitable locus may be obtained, with a view to providing rapid and reliable operation of the tucking blade 6 with a motion that is as smooth and gentle as possible.

It is of course necessary to activate the retaining needles on the folding cylinder 2, in synchronism with a folding operation. Conveniently, the needles may be driven by cam operated from the shafts of the planet gears 9, to cause the needles to retract at the appropriate time to enable a folding operation to take place, and subsequently to project again from the cylinder surface.

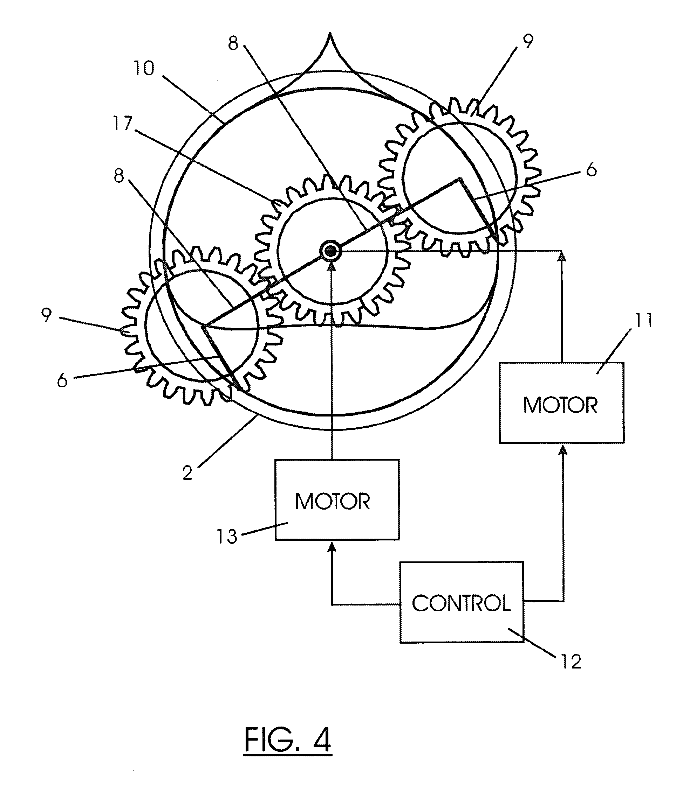

Figure 4 shows an arrangement which is similar to that of Figure 3, but in which the driven ring gear 7 is replaced by a driven sun gear 17. In Figure 4, the sun gear 7 is driven by the motor 11 under control of the controller 12, so as to have a velocity profile that gives rise to a locus 10 of the tucking blades 6 that is similar to that shown in Figure 3. As will be understood from the foregoing description, any other desired locus may be achieved by appropriate control of the motor 11. A particular advantage of the arrangement shown in Figure 4 is that, because the sun gear 17 is much smaller than the ring gear 7, the overall inertia of the system driven by the motor 11 can be very significantly less, thereby facilitating smooth and accurate control of the respective velocity profile.

In Figure 4, there is also shown a further motor 13 that drives both the planet carrier arms 8 and the folding cylinder 2 in rotation, under control of the controller 12. If desired, the cylinder 2 may be driven by a further motor under separate control, such that the velocity profiles of the outputs of the respective motors and the systems that they drive can all be controlled independently, in line with the velocity profile of the digital printing press.

In Figure 4, the sun gear 17 is shown as being in direct engagement with the planetary gears 9. However, it is possible for the sun (or ring) and planet gears to be in driving engagement via intermediate gears which, for the purposes of this specification, includes toothed or tooth-engaging driving belts, and in the context of this specification, the term "driving engagement" is to be construed accordingly.

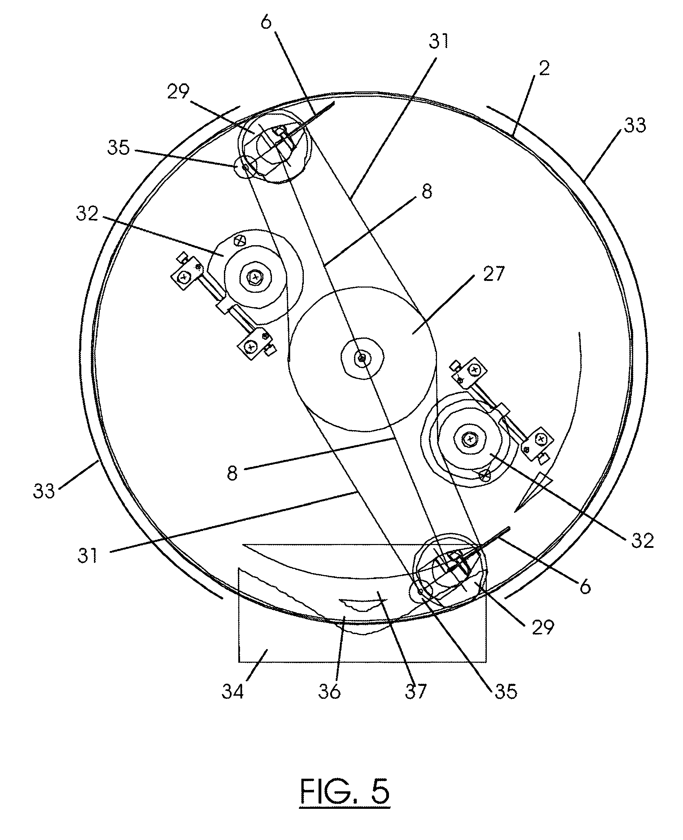

Figure 5 shows an alternative arrangement in which a centre sprocket or pulley 27 is driven with a desired velocity profile by a variable speed motor (servo motor) and is equivalent to the sun wheel 17 in Figure 4. The centre sprocket or pulley 27 drives a pair of circumferentially mounted sprockets or pulleys 29 to which it is connected by one or more chain or belt 31. The sprockets or pulleys 29 are equivalent to the planet gears 9 in the previous embodiments. This arrangement results in a lower rotary inertia as compared to either the ring gear or the sun gear arrangements as previously described. Tensioning devices 32 keep the or each chain or belt 31 under suitable tension. The general mode of operation of the embodiment of Figure 5 may be readily understood from the description of the previous embodiments.

The tucking blades 6 in Figure 5 may now be coupled to the motion of the cylinder 2 only through electronic control. If this coupling or synchronisation were to fail whilst the machine is running, then it is possible that a tucking blade 6 may start to emerge from the cylinder 2. For most of the revolution of the cylinder 2, a guard cage 33 mounted around the circumference of the collecting cylinder 2 and its collated newspaper sheets would restrain the tucking blade 6 whilst the cylinder 2 decelerates to a stop. In this respect, it will be appreciated that the collated newspaper sheets would be forced into the gap between cylinder 2 and cage 33 and act as a very effective friction brake. The only time this would not happen is if the tucking blade 6 starts to emerge in the vicinity of the folding rolls.

To overcome this potential problem, a cam-track device 34 is provided at either the folding tucking blade position in the vicinity of the folding rolls or, as shown in Figure 5, in the vicinity of another non-folding tucking blade 6 whilst the folding blade 6 is in the vicinity of the folding rolls. This latter arrangement is useful where there is less room available in the vicinity of the folding rolls. The cam-track device 34 provides two cam-tracks 36 and 37 along which travel cam followers 35 that are attached to and rotate with each of the sprocket or pulleys 29. The cam-track 36 prevents the tucking blade 6 from emerging if it hasn't already started to do whilst, if the blade 6 has started to emerge, then the cam-track 37 forces it to emerge correctly, even if it is not driven properly by the servo motor via sprocket or pulley 27. With the cam-track device placed to guide one of the non-folding tucking blade mechanisms, the chain or belt drive mechanism is used to force the folding tucking blade 6 to move correspondingly.

Although tucking blades 6 are shown in the illustrated embodiments as being driven together, any number of tucking blades can alternatively be driven individually.

The arrangement of Figure 3 may optionally include an idling sun gear and that of Figure 4 may optionally include an idling ring gear.

Although the intermittent drive mechanisms illustrated and described above are shown as controlling movement of tucking blades 6, they may be adapted or modified to drive other members in an intermittent manner. For example, they may control intermittent movement of cutting blades or numbering heads (devices arranged to print consecutive numbers on consecutive prints).

Intermittent drive mechanisms that are the subject of the present invention may be employed in alternative ways - e.g. for bending or forming wire in the wire forming industry. Although the illustrated use is with a paper web 1, folding, cutting or other operations may be performed on webs of other materials, such as cloth, wood and metals. Due to the high degree of control afforded by the intermittent drive mechanisms, webs of material may be cut either into set lengths or differing lengths.

In this specification, the verb "comprise" has its normal dictionary meaning, to denote non-exclusive inclusion. That is, use of the word "comprise" (or any of its derivatives) to include one feature or more, does not exclude the possibility of also including further features.

## Claims

1. A sheet handling system comprising:
a. a cylinder (2) arranged to engage a sheet on the outer circumferential surface of the cylinder (2) and to transport the sheet from an entry position to an exit position by rotation of the cylinder (2) about its axis; and
b. a drive mechanism mounted at least partly within the cylinder (2) and arranged to cause a member (6) to protrude intermittently from the surface of the cylinder (2) to engage a sheet on that surface:
c. said drive mechanism comprising:
i. a primary gear (7) mounted for rotation about an axis parallel to the cylinder axis;
ii. an arm (8) extending radially of the cylinder (2) and mounted for rotation about an axis parallel to the cylinder axis; and
iii. a planet gear (9) mounted for rotation on said arm (8), in driving engagement with said primary gear (7), and operatively connected to said member (6):
**characterized in that**:
d. said primary gear (7) is arranged to rotate according to a first velocity profile;
e. said arm (8) is arranged to rotate according to a second velocity profile; and
f. said first and second velocity profiles are such that:
i. said planet gear (9) rotates to cause said member (6) to protrude from the surface of the cylinder (2) at first selected times when the cylinder (2) is in a given angular position; and
ii. said planet gear (9) does not rotate to cause said member (6) to protrude from the surface of the cylinder (2) at second selected times when the cylinder (2) is in said given angular position.

2. A sheet handling system according to claim 1, wherein said primary gear is mounted for rotation about the cylinder axis.

3. A sheet handling system according to claim 1 or 2, wherein said arm is mounted for rotation about the cylinder axis.

4. A sheet handling system according to claim 1, 2 or 3, wherein said member is a tucking blade that cooperates with a folding nip to fold said sheet.

5. A sheet handling system according to claim 1, 2 or 3, wherein said member is a cutting blade.

6. A sheet handling system according to claim 1, 2 or 3, wherein said member is a numbering head.

7. A sheet handling system according to any of claims 1 to 6, wherein said primary gear is a sun gear.

8. A sheet handling system according to any of claims 1 to 6, wherein said primary gear is a ring gear.

9. A sheet handling system according to any of the preceding claims, further comprising a motor arranged to drive said primary gear in rotation.

10. A sheet handling system according to any of the preceding claims, further comprising a motor arranged to drive said arm in rotation.

11. A sheet handling system according to any of claims 1 to 10, wherein said arm is fixed relative to the cylinder such that the arm rotates with the cylinder.

12. A sheet handling system according to any of claims 1 to 10, wherein said primary gear is fixed relative to the cylinder such that the arm rotates with the cylinder.

13. A sheet handling system according to any of the preceding claims, further comprising control means arranged to determine said first and/or second velocity profile.

14. A sheet handling system according to claim 13, wherein said control means is arranged to control movement of at least one electric motor arranged to drive said primary gear and/or arm and/or cylinder in rotation.

15. A sheet handling system according to any of the preceding claims, further comprising retaining means arranged to retain one or more sheet on the cylinder.

16. A sheet handling system according to claim 15, further comprising means arranged to engage and release said retaining means at times fixed in relation to operation of said member.

17. A sheet handling system according to any of the preceding claims, further comprising cutting means arranged to cut a web of material into sheets as it is fed onto the cylinder.

18. A sheet handling system according to any of the preceding claims, comprising a plurality of planet gears mounted for rotation on respective arms of a planet carrier and in driving engagement with said primary gear:

19. A sheet handling system according to any of the preceding claims, comprising a plurality of members arranged to protrude intermittently from the surface of the cylinder to engage a sheet on that surface.

20. A sheet handling system according to claims 18 and 19, wherein each said planet gear is operatively connected to a respective one of said members.

21. A sheet handling system according to any of the preceding claims, further comprising guide means arranged to constrain movement of said planet gear when said cylinder is in said given angular position.

22. A sheet handling system according to claim 21, wherein said guide means is such as to constrain movement such that said planet gear may occupy only two possible angular positions when said cylinder is in said given angular position.

23. A printing press incorporating a sheet handling system according to any of the preceding claims, arranged to cut and/or collate and/or fold printed sheets of newsprint.

24. A printing press according to claim 23, arranged to feed a single web of printed newsprint onto the cylinder, where the web is cut, collated and folded.

25. A printing press according to claim 24, wherein printing is effected by a digital process.

26. An intermittent drive system comprising:
a. a cylinder (2) mounted for rotation about its axis; and
b. a drive mechanism mounted at least partly within the cylinder (2) and arranged to cause a member (6) to protrude intermittently from the surface of the cylinder (2):
c. said drive mechanism comprising:
i. a primary gear (7) mounted for rotation about an axis parallel to the cylinder axis;
ii. an arm (8) extending radially of the cylinder (2) and mounted for rotation about an axis parallel to the cylinder axis; and
iii. a planet gear (9) mounted for rotation on said arm (8), in driving engagement with said primary gear (7), and operatively connected to said member (6):
**characterized in that**:
d. said primary gear (7) is arranged to rotate according to a first velocity profile;
e. said arm (8) is arranged to rotate according to a second velocity profile; and
f. said first and second velocity profiles are such that:
i. said planet gear (9) rotates to cause said member (6) to protrude from the surface of the cylinder (2) at first selected times when the cylinder (2) is in a given angular position; and
ii. said planet gear (9) does not rotate to cause said member (6) to protrude from the surface of the cylinder (2) at second selected times when the cylinder (2) is in said given angular position.

## Patentansprüche

1. Bogen-Handhabungssystem, umfassend:
a. einen Zylinder (2), der dazu eingerichtet ist, einen Bogen an der äußeren Umfangsfläche des Zylinders (2) zu ergreifen und den Bogen durch Rotation des Zylinders (2) um seine Achse von einer Eintrittsposition zu einer Austrittsposition zu transportieren; und
b. einen Antriebsmechanismus, welcher zumindest teilweise innerhalb des Zylinders (2) angebracht und dazu eingerichtet ist, zu bewirken, dass ein Element (6) intermittierend aus der Oberfläche des Zylinders (2) herausragt, um einen Bogen an dieser Oberfläche zu ergreifen:
c. wobei der genannte Antriebsmechanismus Folgendes umfasst:
i. ein Primärzahnrad (7), welches zur Rotation um eine zu der Zylinderachse parallele Achse angebracht ist;
ii. einen Arm (8), welcher radial zu dem Zylinder (2) verläuft und zur Rotation um eine zu der Zylinderachse parallele Achse angebracht ist; und iii. ein Planetenrad (9), welches zur Rotation an dem genannten Arm (8) angebracht ist, sich im Antriebseingriff mit dem genannten Primärzahnrad (7) befindet und wirkend mit dem genannten Element (6) verbunden ist:
**dadurch gekennzeichnet, dass:**
d. das genannte Primärzahnrad (7) dazu eingerichtet ist, gemäß einem ersten Geschwindigkeitsprofil zu rotieren;
e. der genannte Arm (8) dazu eingerichtet ist, gemäß einem zweiten Geschwindigkeitsprofil zu rotieren; und
f. die genannten ersten und zweiten Geschwindigkeitsprofile derart beschaffen sind, dass:
i. das genannte Planetenrad (9) zu ersten ausgewählten Zeiten, wenn sich der Zylinder (2) in einer gegebenen Winkelposition befindet, rotiert, um zu bewirken, dass das genannte Element (6) aus der Oberfläche des Zylinders (2) herausragt; und
ii. das genannte Planetenrad (9) zu zweiten ausgewählten Zeiten, wenn sich der Zylinder (2) in der genannten gegebenen Winkelposition befindet, nicht rotiert, um zu bewirken, dass das genannte Element (6) aus der Oberfläche des Zylinders (2) herausragt.

2. Bogen-Handhabungssystem nach Anspruch 1, wobei das genannte Primärzahnrad zur Rotation um die Zylinderachse angebracht ist.

3. Bogen-Handhabungssystem nach Anspruch 1 oder 2, wobei der genannte Arm zur Rotation um die Zylinderachse angebracht ist.

4. Bogen-Handhabungssystem nach Anspruch 1, 2 oder 3, wobei das genannte Element ein Falzmesser ist, welches mit einem Falzspalt zusammenwirkt, um den genannten Bogen zu falten.

5. Bogen-Handhabungssystem nach Anspruch 1, 2 oder 3, wobei das genannte Element ein Schneidmesser ist.

6. Bogen-Handhabungssystem nach Anspruch 1, 2 oder 3, wobei das genannte Element ein Nummerierwerk ist.

7. Bogen-Handhabungssystem nach einem beliebigen der Ansprüche 1 bis 6, wobei das genannte Primärzahnrad ein Sonnenrad ist.

8. Bogen-Handhabungssystem nach einem beliebigen der Ansprüche 1 bis 6, wobei das genannte Primärzahnrad ein Hohlrad ist.

9. Bogen-Handhabungssystem nach einem beliebigen der vorangehenden Ansprüche, welches ferner einen Motor umfasst, welcher dazu eingerichtet ist, das genannte Primärzahnrad drehend anzutreiben.

10. Bogen-Handhabungssystem nach einem beliebigen der vorangehenden Ansprüche, welches ferner einen Motor umfasst, welcher dazu eingerichtet ist, den genannten Arm drehend anzutreiben.

11. Bogen-Handhabungssystem nach einem beliebigen der Ansprüche 1 bis 10, wobei der genannte Arm relativ zu dem Zylinder unbeweglich ist, so dass der Arm mit dem Zylinder rotiert.

12. Bogen-Handhabungssystem nach einem beliebigen der Ansprüche 1 bis 10, wobei das genannte Primärzahnrad relativ zu dem Zylinder unbeweglich ist, so dass der Arm mit dem Zylinder rotiert.

13. Bogen-Handhabungssystem nach einem beliebigen der vorangehenden Ansprüche, welches ferner Steuermittel umfasst, welche dazu eingerichtet sind, das genannte erste und/oder zweite Geschwindigkeitsprofil zu bestimmen.

14. Bogen-Handhabungssystem nach Anspruch 13, wobei das genannte Steuermittel dazu eingerichtet ist, die Bewegung mindestens eines elektrischen Motors zu steuern, welcher dazu eingerichtet ist, das genannte Primärzahnrad und/oder den Arm und/oder Zylinder drehend anzutreiben.

15. Bogen-Handhabungssystem nach einem beliebigen der vorangehenden Ansprüche, welches ferner Haltemittel umfasst, welche dazu eingerichtet sind, eines oder mehrere Blätter an dem Zylinder zu halten.

16. Bogen-Handhabungssystem nach Anspruch 15, welches ferner Mittel umfasst, welche dazu eingerichtet sind, die genannten Haltemittel zu in Beziehung zum Betrieb des genannten Elements festgelegten Zeitpunkten einzurücken oder freizugeben.

17. Bogen-Handhabungssystem nach einem beliebigen der vorangehenden Ansprüche, welches ferner Schneidemittel umfasst, welche dazu eingerichtet sind, eine Materialbahn in Bögen zu schneiden, während diese dem Zylinder zugeführt wird.

18. Bogen-Handhabungssystem nach einem beliebigen der vorangehenden Ansprüche, welches eine Mehrzahl Planetenräder umfasst, welche zur Rotation an entsprechenden Armen eines Planetenradträgers und in Antriebseingriff mit dem genannten Primärzahnrad angebracht sind.

19. Bogen-Handhabungssystem nach einem beliebigen der vorangehenden Ansprüche, welches eine Mehrzahl Elemente umfasst, welche dazu eingerichtet sind, intermittierend aus der Oberfläche des Zylinders herauszuragen, um einen Bogen an dieser Oberfläche zu ergreifen.

20. Bogen-Handhabungssystem nach den Ansprüchen 18 und 19, wobei jedes der genannten Planetenräder wirkend mit einem entsprechenden genannten Element verbunden ist.

21. Bogen-Handhabungssystem nach einem beliebigen der vorangehenden Ansprüche, welches ferner Führungsmittel umfasst, welche dazu eingerichtet sind, die Bewegung des genannten Planetenrades einzuschränken, wenn sich der genannte Zylinder in der genannten gegebenen Winkelposition befindet.

22. Bogen-Handhabungssystem nach Anspruch 21, wobei das genannte Führungsmittel derart beschaffen ist, dass es die Bewegung so einschränkt, dass das genannte Planetenrad nur zwei mögliche Winkelpositionen einnehmen kann, wenn sich der genannte Zylinder in der genannten gegebenen Winkelposition befindet.

23. Druckerpresse, welche ein Bogen-Handhabungssystem nach einem beliebigen der vorangehenden Ansprüche umfasst, welches dazu eingerichtet ist, bedruckte Zeitungspapierblätter zu schneiden und/oder zusammenzutragen und/oder zu falten.

24. Druckerpresse nach Anspruch 23, welche dazu eingerichtet ist, eine einzelne Bahn bedruckten Zeitungspapiers dem Zylinder zuzuführen, wo die Bahn geschnitten, zusammengetragen und gefaltet wird.

25. Druckerpresse nach Anspruch 24, wobei der Druck durch einen digitalen Vorgang erfolgt.

26. Intermittierendes Antriebssystem, welches Folgendes umfasst:
a. einen zur Rotation um seine Achse angebrachten Zylinder (2); und
b. einen Antriebsmechanismus, welcher zumindest teilweise innerhalb des Zylinders (2) angebracht und dazu eingerichtet ist, zu bewirken, dass ein Element (6) intermittierend aus der Oberfläche des Zylinders (2) herausragt;
c. wobei der genannte Antriebsmechanismus Folgendes umfasst:
i. ein Primärzahnrad (7), welches zur Rotation um eine zu der Zylinderachse parallele Achse angebracht ist;
ii. einen Arm (8), welcher radial zu dem Zylinder (2) verläuft und zur Rotation um eine zu der Zylinderachse parallele Achse angebracht ist; und
iii. ein Planetenrad (9), welches zur Rotation an dem genannten Arm (8) angebracht ist, sich im Antriebseingriff mit dem genannten Primärzahnrad (7) befindet und wirkend mit dem genannten Element (6) verbunden ist:
**dadurch gekennzeichnet, dass**:
d. das genannte Primärzahnrad (7) dazu eingerichtet ist, gemäß einem ersten Geschwindigkeitsprofil zu rotieren;
e. der genannte Arm (8) dazu eingerichtet ist, gemäß einem zweiten Geschwindigkeitsprofil zu rotieren; und
f. die genannten ersten und zweiten Geschwindigkeitsprofile derart beschaffen sind, dass:
i. das genannte Planetenrad (9) zu ersten ausgewählten Zeiten, wenn sich der Zylinder (2) in einer gegebenen Winkelposition befindet, rotiert, um zu bewirken, dass das genannte Element (6) aus der Oberfläche des Zylinders (2) herausragt; und
ii. das genannte Planetenrad (9) zu zweiten ausgewählten Zeiten, wenn sich der Zylinder (2) in der genannten gegebenen Winkelposition befindet, nicht rotiert, um zu bewirken, dass das genannte Element (6) aus der Oberfläche des Zylinders (2) herausragt.

## Revendications

1. Système de manipulation de feuilles comprenant :
a) un cylindre (2) conçu pour venir en prise avec une feuille sur la surface circonférentielle extérieure du cylindre (2) et pour transporter la feuille depuis une position d'entrée vers une position de sortie, par rotation du cylindre (2) autour de son axe ; et
b) un mécanisme d'entraînement monté au moins partiellement dans le cylindre (2) et conçu pour faire en sorte qu'un élément (6) soit en saillie de manière intermittente par rapport à la surface du cylindre (2) pour venir en prise avec une feuille sur ladite surface ;
c) ledit mécanisme d'entraînement comprenant :
i. un pignon primaire (7) monté à rotation autour d'un axe parallèle à l'axe du cylindre ;
ii. un bras (8) s'étendant radialement par rapport au cylindre (2) et monté à rotation autour d'un axe parallèle à l'axe du cylindre ; et
iii. un pignon planétaire (9) monté à rotation sur ledit bras (8) en engagement d'entraînement avec ledit pignon (7) primaire et de manière opérationnelle avec ledit élément (6) ;
**caractérisé en ce que** :
d) ledit pignon (7) primaire est conçu pour tourner selon un premier profil de vitesse ;
e) ledit bras (8) est conçu pour tourner selon un second profil de vitesse ; et
f) lesdits premier et second profils de vitesse sont tels que :
i. ledit pignon (9) planétaire tourne pour faire en sorte que ledit élément (6) soit en saillie à partir de la surface du cylindre (2), à des premiers instants donnés, lorsque le cylindre (2) est disposé selon une position angulaire donnée ; et
ii. ledit pignon (9) planétaire ne tourne pas pour faire en sorte que ledit élément (6) soit en saillie à partir de la surface du cylindre (2), à des seconds instants donnés, lorsque le cylindre (2) est en ladite position angulaire donnée.

2. Système de manipulation de feuilles selon la revendication 1, **caractérisé en ce que** ledit pignon primaire est monté à rotation autour de l'axe du cylindre.

3. Système de manipulation de feuilles selon la revendication 1 ou 2, **caractérisé en ce que** ledit bras est monté à rotation autour de l'axe du cylindre.

4. Système de manipulation de feuilles selon la revendication 1, 2 ou 3, **caractérisé en ce que** ledit élément est une lame plieuse qui coopère avec un contact de pliage pour plier ladite feuille.

5. Système de manipulation de feuilles selon la revendication 1, 2 ou 3, **caractérisé en ce que** ledit élément est une lame de découpe.

6. Système de manipulation de feuilles selon la revendication 1, 2 ou 3, **caractérisé en ce que en ce que** ledit élément est une tête de pagination.

7. Système de manipulation de feuilles selon l'une des revendications 1 à 6, **caractérisé en ce que** ledit pignon primaire est un pignon planétaire.

8. Système de manipulation de feuilles selon l'une des revendications 1 à 6, **caractérisé en ce que** ledit pignon primaire est une couronne dentée.

9. Système de manipulation de feuilles selon l'une des revendications précédentes, **caractérisé en ce qu'**il comporte en outre un moteur conçu pour entraîner ledit pignon primaire en rotation.

10. Système de manipulation de feuilles selon l'une des revendications précédentes, **caractérisé en ce qu'**il comporte en outre un moteur conçu pour entraîner ledit bras en rotation.

11. Système de manipulation de feuilles selon l'une des revendications 1 à 10, **caractérisé en ce que** ledit bras est fixé par rapport au cylindre de manière que ledit bras tourne avec le cylindre.

12. Système de manipulation de feuilles selon l'une des revendications 1 à 10, **caractérisé en ce que** ledit pignon primaire est fixé par rapport au cylindre de sorte que le bras tourne avec le cylindre.

13. Système de manipulation de feuilles selon l'une des revendications précédentes, **caractérisé en ce qu'**il comporte en outre des moyens de commande conçu pour déterminer ledit premiers et/ou second profils de vitesse.

14. Système de manipulation de feuilles selon la revendication 13, **caractérisé en ce que** lesdits moyens de commande sont conçus pour contrôler le mouvement d'au moins un moteur électrique conçu pour entraîner ledit pignon primaire et/ou le bras et/ou le cylindre, en rotation.

15. Système de manipulation de feuilles selon l'une des revendications précédentes, **caractérisé en ce qu'**il comporte en outre des moyens de retenue conçus pour retenir une ou plusieurs feuilles sur le cylindre.

16. Système de manipulation de feuilles selon la revendication 15, **caractérisé en ce qu'**il comporte en outre des moyens conçus pour venir en prise et relâcher lesdits moyens de rétention, à des instants déterminés par rapport au fonctionnement dudit élément.

17. Système de manipulation de feuilles selon l'une des revendications précédentes, **caractérisé en ce qu'**il comporte en outre des moyens de découpe conçus pour couper une bobine de matériau en feuilles lorsqu'elle est alimentée sur le cylindre.

18. Système de manipulation de feuilles selon l'une des revendications précédentes, **caractérisé en ce qu'**il comporte une pluralité de pignons planétaires montés à rotation sur des bras respectifs d'un porteur planétaire et en engagement d'entraînement avec ledit pignon primaire.

19. Système de manipulation de feuilles selon l'une des revendications précédentes, **caractérisé en ce qu'**il comprend une pluralité d'éléments conçus pour faire saillie de manière intermittente à partir de la surface du cylindre pour venir en prise avec une feuille sur cette surface.

20. Système de manipulation de feuilles selon l'une des revendications 18 ou 19, **caractérisé en ce que** chaque pignon planétaire est relié de manière opérationnelle à l'un respectif des dits éléments.

21. Système de manipulation de feuilles selon l'une des revendications précédentes, **caractérisé en ce qu'**il comporte en outre des moyens de guidage conçus pour restreindre le mouvement dudit pignon planétaire lorsque ledit cylindre est en ladite position angulaire donnée.

22. Système de manipulation de feuilles selon la revendication 21, **caractérisé en ce que** lesdits moyens de guidage sont tels qu'ils restreignent le mouvement de façon que ledit pignon planétaire puisse occuper seulement deux positions angulaires possibles, lorsque ledit cylindre est dans ladite position angulaire donnée.

23. Procédé d'impression incluant un système de manipulation de feuilles selon l'une des revendications précédentes, conçu pour découper et/ou assembler et/ou plier des feuilles imprimées de papier journal.

24. Procédé d'impression selon la revendication 23, conçu pour alimenter une bobine unique de papier journal imprimé sur le cylindre, et où la bobine est découpée, assemblée, et pliée.

25. Procédé d'impression selon la revendication 24, **caractérisé en ce que** l'impression est effectuée par un processus numérique.

26. Système d'entrainement intermittent comprenant :
a) un cylindre (2) monté à rotation autour de son axe ; et
b) un mécanisme d'entraînement monté au moins partiellement dans le cylindre (2) et conçu pour faire en sorte qu'un élément (6) soit en saillie de manière intermittente par rapport à la surface du cylindre (2) pour venir en prise avec une feuille sur ladite surface ;
c) ledit mécanisme d'entraînement comprenant :
i. un pignon primaire (7) monté à rotation autour d'un axe parallèle à l'axe du cylindre ;
ii. un bras (8) s'étendant radialement par rapport au cylindre (2) et monté à rotation autour d'un axe parallèle à l'axe du cylindre ; et
iii. un pignon planétaire (9) monté à rotation sur ledit bras 8 en engagement d'entraînement avec ledit pignon (7) primaire et de manière opérationnelle avec ledit élément (6) ;
**Caractérisé en ce que :**
d) ledit pignon (7) primaire est conçu pour tourner selon un premier profil de vitesse ;
e) ledit bras (8) est conçu pour tourner selon un second profil de vitesse ; et
f) lesdits premier et second profils de vitesse sont tels que :
i. ledit pignon (9) planétaire tourne pour faire en sorte que ledit élément (6) soit en saillie à partir de la surface du cylindre (2), à des premiers instants donnés, lorsque le cylindre (2) est disposé selon une position angulaire donnée ; et
ii. ledit pignon (9) planétaire ne tourne pas pour faire en sorte que ledit élément (6) soit en saillie à partir de la surface du cylindre (2), à des seconds instants donnés, lorsque le cylindre (2) est en ladite position angulaire donnée.
